# EUROPEAN PATENT APPLICATION

(11) **EP 3 345 886 A1**
(43) Date of publication of application: **11.07.2018**
(21) Application number: 18150348.3
(22) Date of filing: 04.01.2018
(51) Int. Cl.: C04B 41/86, C04B 41/90, C04B 41/50, C03C 8/14, C03C 14/00, C04B 41/87

(54) **METHOD TO FABRICATE HIGH TEMPERATURE COMPOSITE WITH INTEGRATED BARRIER COATING**

(30) Priority: 06.01.2017 US 201715400583
(71) Applicant: United Technologies Corporation, Farmington, CT 06032 (US)
(72) Inventor: MAGDEFRAU, Neal, Tolland, CT Connecticut 06084 (US); SCHMIDT, Wayde R., Pomfret Center, CT Connecticut 06259 (US); SHEEDY, Paul, Bolton, CT Connecticut 06043 (US)
(74) Representative: Dehns

(57) **Abstract**

A method of fabricating a ceramic component includes hot pressing a composite component with a glass powder / filler cover mixture to form a consolidated glass-based coating on the composite component.

## Description

### BACKGROUND

The present disclosure relates to ceramic matrix composites and, more particularly, to an integrated barrier coating thereof.

Glass matrix composites and polymer-derived ceramic matrix composites are suitable for high temperatures applications. Ceramic materials are typically fabricated using techniques such as polymer infiltration and pyrolysis, melt infiltration, slurry infiltration, slip casting, tape casting, injection molding, glass transfer molding, dry pressing, isostatic pressing, hot isostatic pressing and others. Ceramic-based materials offer superior temperature resistance properties relative to comparable metallic materials, however, challenges may exist in the adaptation of ceramic materials to gas turbine applications.

### SUMMARY

A method of fabricating a ceramic component (e.g. a ceramic component as herein described) according to one disclosed non-limiting embodiment of the present disclosure can include hot pressing a composite component with a glass powder / filler cover mixture to form a consolidated glass-based environmental barrier coating with the composite component.

A further embodiment of the present disclosure wherein hot pressing the composite component is, comprises or includes filling pores in the composite component.

A further embodiment of the present disclosure wherein hot pressing the composite component is, comprises or includes densifying the composite component.

A further embodiment of the present disclosure wherein hot pressing the composite component is, comprises or includes filling pores in a Polymer Infiltration and Pyrolysis (PIP) or Chemical Vapor Infiltration (CVI) Ceramic Matrix Composite (CMC).

A further embodiment of the present disclosure wherein the glass powder / filler cover mixture is, comprises or includes a metal based bond coat.

A further embodiment of the present disclosure wherein the glass powder / filler cover mixture is comprises or includes a glass matrix.

A further embodiment of the present disclosure wherein the glass matrix is, comprises or includes at least one of lithium aluminosilicate (LAS), barium magnesium aluminosilicate (BMAS), calcium magnesium aluminosilicate (CMAS), strontium aluminosilicate (SAS), borosilicates, other aluminosilicates, rare earth silicates, high silica and phosphate glasses, and mixtures thereof. A further embodiment of the present disclosure wherein the glass powder / filler cover mixture is, comprises or includes a polymer-derived matrix compositions.

A further embodiment of the present disclosure wherein the polymer-derived matrix composition is, comprises or includes at least one of SiC, C-SiC, SiOC, Si3N4, SiCN, SiC/AlN, B4C, BCN.

A further embodiment of the present disclosure wherein the glass powder / filler cover mixture is, comprises or includes a polymeric system.

A further embodiment of the present disclosure wherein the polymeric system is, comprises or includes at least one of carbosilanes, silazanes, silanes, carbosiloxanes, aluminosiloxanes, and inorganic polymers containing B, Al or P.

In one disclosed non-limiting embodiment of the disclosure, a ceramic component (e.g. a ceramic component as herein described) is, comprises or includes a composite and a consolidated glass-based coating on the composite, the consolidated glass-based coating at least partially filling pores in the composite. The composite may be a composite component. In a further embodiment of the present disclosure, the composite is a glass matrix composite. In further embodiment of the present disclosure, the composite is a Polymer Infiltration and Pyrolysis (PIP) Ceramic Matrix Composite (CMC).

A ceramic component according to one disclosed non-limiting embodiment of the present disclosure can include a Polymer Infiltration and Pyrolysis (PIP) Ceramic Matrix Composite (CMC); and a consolidated glass-based coating on the Polymer Infiltration and Pyrolysis (PIP) Ceramic Matrix Composite (CMC), the consolidated glass-based coating at least partially filling pores in the composite component.

A further embodiment of the present disclosure wherein the consolidated glass-based coating is, comprises or includes a metal based bond coat.

A further embodiment of the present disclosure wherein the consolidated glass-based coating is, comprises or includes a polymer-derived matrix composition.

A further embodiment of the present disclosure wherein the consolidated glass-based coating is, comprises or includes a polymer-derived, metallic or ceramic filler.

A ceramic component according to one disclosed non-limiting embodiment of the present disclosure is, comprises or can include a glass matrix composite; and a consolidated glass-based coating on the glass matrix composite, the consolidated glass-based coating at least partially filling pores in the composite component.

A further embodiment of the present disclosure wherein the consolidated glass-based coating is, comprises or includes a metal based bond coat.

A further embodiment of the present disclosure wherein the consolidated glass-based coating is, comprises or includes a glass matrix.

A further embodiment of the present disclosure is, comprises or may include the composite matrix and environmental barrier coating (e.g. the consolidated glass-based coating) are co-densified in a single step process.

A further embodiment of the present disclosure wherein the composite matrix and environmental barrier coating (e.g. the consolidated glass-based coating) are densified in a multi-step process.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiment. The drawings that accompany the detailed description can be briefly described as follows:
FIG. 1 illustrates an example method of fabricating a ceramic component for a PIP composite;
FIG. 2 illustrates an example method of fabricating a ceramic component for a glass matrix composite;
FIG. 3 shows a schematic cross-section of a component before a coating according to one disclosed non-limiting embodiment is applied; and
FIG. 4 shows a schematic cross-section of a component after the coating according to one disclosed non-limiting embodiment is applied.

### DETAILED DESCRIPTION

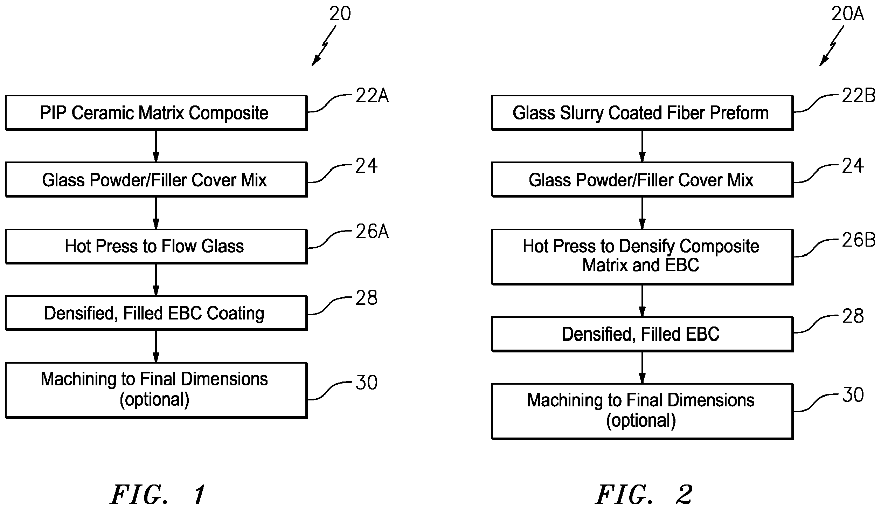

FIG. 1 and 2 illustrate example methods 20, 20A for processing a ceramic component. The methods 20, 20A permit fabrication of ceramic components having unique compositions and/or microstructures that are not heretofore available. Furthermore, the methods 20, 20A can be used to produce compositions and/or microstructures for the enhancement of densification, thermal conductivity or other target property in components such as cooled turbine engine components.

Initially, an example Polymer Infiltration and Pyrolysis (PIP) Ceramic Matrix Composite (CMC) (step 22A; FIG. 1), or an example glass matrix composite (step 22B; FIG. 2) receives a glass powder / filler cover mixture (step 24). The 'PIP' process for fabricating a CMC entails infiltration of a low viscosity polymer into the reinforcing fiber structure (e.g. ceramic fibers, carbon fibers, glass fibers, metal fibers, mixed fibers, etc.) followed by pyrolysis, e.g., heating the polymer precursor in a controlled atmosphere in the absence of oxygen whereby it decomposes and converts into a ceramic.

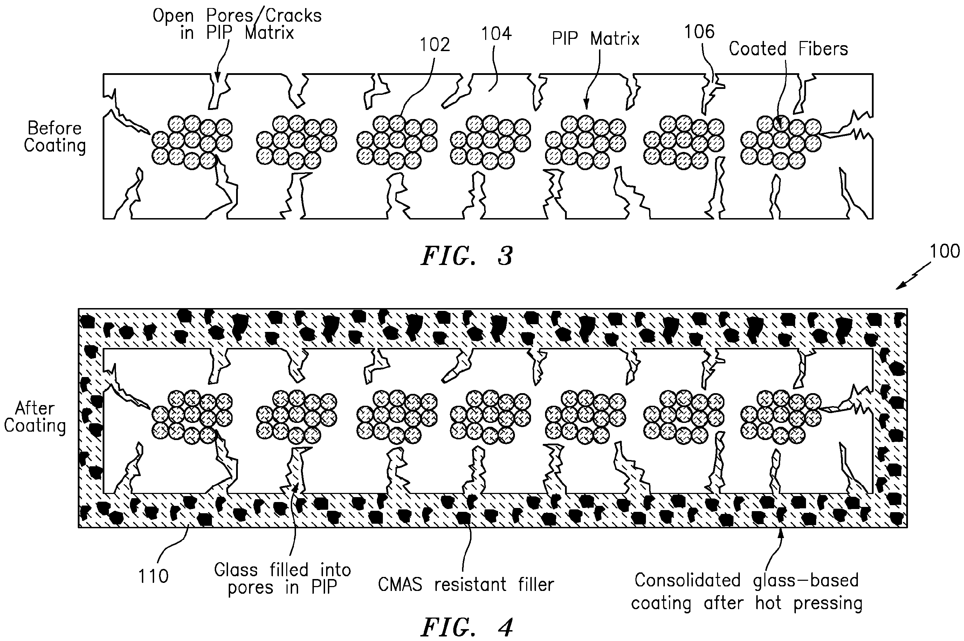

A difference between a PIP composite and a polymer (organic) matrix composite (e.g. carbon fiber epoxy) is that the polymers used in the PIP process (i.e. pre-ceramic polymers) are typically formulated such that upon heat treatment (pyrolysis) they form a ceramic char with a desirable composition (i.e. polymer-derived ceramic). PIP processing techniques may, for example, differ in the method in which the ceramic precursors are delivered into a green state and the formation mechanisms of the final ceramic material from the precursors. During that heat-treat process, there are significant weight loss and volume changes, which result in a macro/micro cracked structure, i.e., porous ceramic matrix (FIG. 3). Typically, the PIP process then involves re-infiltrations with the pre-ceramic polymers and the process is repeated until the desired density/porosity is reached. However, at some point in the process, the density cannot be significantly increased further through re-infiltration of resin.

The ceramic matrix composite (CMC) component 100 (FIG. 4) typically includes fiber bundles 102 within a ceramic matrix 104 for use in, for example, aerospace applications (FIG. 3). Typically, the CMC component 100 includes open pores 106 within the matrix 104 (FIG. 3).

Next, the component (FIG. 3) is hot pressed to flow the glass powder / filler cover mixture (step 26A, FIG. 1) or densify the composite matrix and a protective coating such as an environmental barrier coating (EBC) (step 26B; FIG. 2) to form a consolidated glass-based coating 110 (FIG. 4) in a single step. Application of the glass/powder filler cover mixture and hot pressing allows for the densification of the PIP preform (FIG. 1) and provides the desired environmental properties in essentially a single step process. In both instances (FIG. 1 and 2) the glass/powder filler cover mixture could include other form factors such as a 'tape' (particles held together with an organic and/or inorganic binder) or be otherwise provided to the preform via methods such as slurry coating. When hot pressing, glass transfer molding or other such processing methods may be used to create the glass, ceramic, polymer-derived, or hybrid matrix composites. This integrates one or more additional bonding or protective layers in the CMC component 100. More specifically, a bond coat, additional barrier layers, or combination bond coat and barrier layer architecture, is integrated as part of the hot pressing process and is formed during consolidation of the matrix. Also, this hot pressing can include any variant of that process where an appropriate level of at least one of heat and/or pressure is applied (e.g. hot isostatic pressing, or in some instances simply a pressureless heat treatment).

In one example, for a polymer-derived ceramic (PDC)/glass or glass matrix 104 (FIG. 3), a PDC/glass barrier coating formulation could be deposited via painting, spraying, dip coating, direct write, printing, etc., during layup, followed by hot pressing of the coated layup. This results in an integrated, bonded protective layer, or layers, upon the consolidated matrix (FIG. 4) through densification of the CMC component (step 28). Finally, the component may be machined or otherwise processed to final dimensions.

Compositions of the coating formulations could be modified to enhance bonding to the matrix as well as to selectively design properties for specific protective functionalities (temperature, atmosphere, moisture, etc.). Thus, the chemistry of the integrated layer could be designed for the particular function (bonding, protection). The coating chemistry can be the same or different than the matrix composition, and can also be graded in any number of architectures.

The glass/powder filler cover mixture could be constituted in various manners and, in one example, may only be composed of glass powder. The glass may include at least one of lithium aluminosilicate (LAS), barium magnesium aluminosilicate (BMAS), calcium magnesium aluminosilicate (CMAS), strontium aluminosilicate (SAS), borosilicates, other aluminosilicates, rare earth silicates, high silica and phosphate glasses, and mixtures thereof. In other examples, the glass/powder filler cover mixture is composed of both glass and one or more filler powders. These powder fillers are selected to provide the additional benefit of the invention beyond what the glass provides. The filler 'powder' may include other form factors such as nanotubes, chopped fibers, etc. The glass/powder filler cover mixture thus includes a cover mixture containing both glass and powder filler(s). Various high temperature or refractory metal or intermetallic based bond coat (e.g. Si, MCrAlY, silicides, aluminides, etc.) and polymer-derived matrix compositions (SiC, C-SiC, SiOC, Si3N4, SiCN, SiC/AlN, B4C, BCN etc.) can be provided as the glass powder / filler cover mixture, as well as suitable polymeric systems (carbosilanes, silazanes, silanes, carbosiloxanes, aluminosiloxanes, other inorganic polymers containing B, Al or P, etc.).

Such glass and PDC matrix composites may require additional thermal and environmental protection. The methods disclosed herein provide a unique modification that can exploit the processing of glass, PDC and PDC/glass composite matrix systems to provide an integrated protective layer using standard processing methods.

The use of the terms "a" and "an" and "the" and similar references in the context of description (especially in the context of the following claims) are to be construed to cover both the singular and the plural, unless otherwise indicated herein or specifically contradicted by context. The modifier "about" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other. It should be appreciated that relative positional terms such as "forward," "aft," "upper," "lower," "above," "below," and the like are with reference to the normal operational attitude of the vehicle and should not be considered otherwise limiting.

Although the different non-limiting embodiments have specific illustrated components, the embodiments of this invention are not limited to those particular combinations. It is possible to use some of the components or features from any of the non-limiting embodiments in combination with features or components from any of the other non-limiting embodiments.

It should be appreciated that like reference numerals identify corresponding or similar elements throughout the several drawings. It should also be appreciated that although a particular component arrangement is disclosed in the illustrated embodiment, other arrangements will benefit herefrom.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be appreciated that within the scope of the appended claims, the disclosure may be practiced other than as specifically described. For that reason the appended claims should be studied to determine true scope and content.

Certain preferred embodiments of the present disclosure are as follows:
1. A method of fabricating a ceramic component, comprising:
   hot pressing a composite component with a glass powder / filler cover mixture to form a consolidated glass-based environmental barrier coating with the composite component.
2. The method as recited in embodiment 1, wherein hot pressing the composite component includes filling pores in the composite component.
3. The method as recited in embodiment 1, wherein hot pressing the composite component includes densifying the composite component.
4. The method as recited in embodiment 1, wherein hot pressing the composite component includes filling pores in a Polymer Infiltration and Pyrolysis (PIP) or Chemical Vapor Infiltration (CVI) Ceramic Matrix Composite (CMC).
5. The method as recited in embodiment 1, wherein the glass powder / filler cover mixture includes a metal based bond coat.
6. The method as recited in embodiment 1, wherein the glass powder / filler cover mixture includes a glass matrix.
7. The method as recited in embodiment 6, wherein the glass matrix includes at least one of lithium aluminosilicate (LAS), barium magnesium aluminosilicate (BMAS), calcium magnesium aluminosilicate (CMAS), strontium aluminosilicate (SAS), borosilicates, other aluminosilicates, rare earth silicates, high silica and phosphate glasses, and mixtures thereof.
8. The method as recited in embodiment 1, wherein the glass powder / filler cover mixture includes a polymer-derived matrix compositions.
9. The method as recited in embodiment 8, wherein the polymer-derived matrix composition includes at least one of SiC, C-SiC, SiOC, Si3N4, SiCN, SiC/AlN, B₄C, BCN.
10. The method as recited in embodiment 1, wherein the glass powder / filler cover mixture includes a polymeric system.
11. The method as recited in embodiment 10, wherein the polymeric system includes at least one of carbosilanes, silazanes, silanes, carbosiloxanes, aluminosiloxanes, and inorganic polymers containing B, Al or P.
12. A ceramic component, comprising:
   a Polymer Infiltration and Pyrolysis (PIP) Ceramic Matrix Composite (CMC); and
   a consolidated glass-based coating on the Polymer Infiltration and Pyrolysis (PIP) Ceramic Matrix Composite (CMC), the consolidated glass-based coating at least partially filling pores in the composite component.
13. The ceramic component as recited in embodiment 12, wherein the consolidated glass-based coating includes a metal based bond coat.
14. The ceramic component as recited in embodiment 12, wherein the consolidated glass-based coating includes a polymer-derived matrix composition.
15. The ceramic component as recited in embodiment 12, wherein the consolidated glass-based coating includes a polymer-derived, metallic or ceramic filler.
16. A ceramic component, comprising:
   a glass matrix composite; and
   a consolidated glass-based coating on the glass matrix composite, the consolidated glass-based coating at least partially filling pores in the composite component.
17. The ceramic component as recited in embodiment 16, wherein the consolidated glass-based coating includes a metal based bond coat.
18. The ceramic component as recited in embodiment 16, wherein the consolidated glass-based coating includes a glass matrix.
19. The ceramic component as recited in embodiment 16, wherein the composite matrix and environmental barrier coating are co-densified in a single step process.
20. The ceramic component as recited in embodiment 16, wherein the composite matrix and environmental barrier coating are densified in a multi-step process.

## Claims

1. A method of fabricating a ceramic component, comprising:
hot pressing a composite component with a glass powder / filler cover mixture to form a consolidated glass-based environmental barrier coating with the composite component.

2. The method as recited in claim 1, wherein hot pressing the composite component includes filling pores in the composite component, and/or includes densifying the composite component.

3. The method as recited in claim 1 or claim 2, wherein hot pressing the composite component includes filling pores in a Polymer Infiltration and Pyrolysis (PIP) or Chemical Vapor Infiltration (CVI) Ceramic Matrix Composite (CMC).

4. The method as recited in any preceding claim, wherein the glass powder / filler cover mixture includes a metal based bond coat.

5. The method as recited in any preceding claim, wherein the glass powder / filler cover mixture includes a glass matrix, preferably
wherein the glass matrix includes at least one of lithium aluminosilicate (LAS), barium magnesium aluminosilicate (BMAS), calcium magnesium aluminosilicate (CMAS), strontium aluminosilicate (SAS), borosilicates, other aluminosilicates, rare earth silicates, high silica and phosphate glasses, and mixtures thereof.

6. The method as recited in any preceding claim, wherein the glass powder / filler cover mixture includes a polymer-derived matrix compositions, preferably
wherein the polymer-derived matrix composition includes at least one of SiC, C-SiC, SiOC, Si3N4, SiCN, SiC/AlN, B₄C, BCN.

7. The method as recited in any preceding claim, wherein the glass powder / filler cover mixture includes a polymeric system, preferably
wherein the polymeric system includes at least one of carbosilanes, silazanes, silanes, carbosiloxanes, aluminosiloxanes, and inorganic polymers containing B, Al or P.

8. A ceramic component, comprising:
a composite and a consolidated glass-based coating on the composite, the consolidated glass-based coating at least partially filling pores in the composite.

9. A ceramic component according to claim 8 wherein the composite is a glass matrix composite.

10. A ceramic component according to claim 8 wherein the composite is a Polymer Infiltration and Pyrolysis (PIP) Ceramic Matrix Composite (CMC).

11. The ceramic component as recited in any one of claims 8 to 10, wherein the consolidated glass-based coating includes a polymer-derived matrix composition.

12. The ceramic component as recited in any one of claims 8 to 11, wherein the consolidated glass-based coating includes a polymer-derived, metallic or ceramic filler.

13. The ceramic component as recited in any one of claims 8 to 12, wherein the consolidated glass-based coating includes a metal based bond coat.

14. The ceramic component as recited in any one of claims 8 to 13, wherein the consolidated glass-based coating includes a glass matrix.

15. The ceramic component as recited in any one of claims 8 to 14, wherein the composite matrix and environmental barrier coating are co-densified in a single step process, and/or
wherein the composite matrix and environmental barrier coating are densified in a multi-step process.
